(19) Europäisches Patentamt
European Patent Office
Office européen des brevets

(11) **EP 3 330 921 A1**

(12) **EUROPEAN PATENT APPLICATION**

(43) Date of publication:
**06.06.2018 Bulletin 2018/23**

(51) Int Cl.:
**G06T 7/00** *(2017.01)*    *G01B 11/00 (2006.01)*
**G01B 11/24** *(2006.01)*

(21) Application number: **17001905.3**

(22) Date of filing: **22.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.11.2016 JP 2016233160**

(71) Applicant: **CANON KABUSHIKI KAISHA Tokyo (JP)**

(72) Inventor: **Niwayama, Yutaka Tokyo (JP)**

(74) Representative: **WESER & Kollegen Radeckestraße 43 81245 München (DE)**

(54) **INFORMATION PROCESSING DEVICE, MEASURING APPARATUS, SYSTEM, CALCULATING METHOD, STORAGE MEDIUM, AND ARTICLE MANUFACTURING METHOD**

(57) An information processing device (100) that calculates a position and an orientation of a target object comprises a three dimensional shape model holding unit (12) that acquires measurement data of a shape of the target object and a shape model of the target object, and a position and orientation calculating unit (17) that calculates a position and an orientation of the target object based on sampling information of a specific part for specifying the orientation of the target object in the shape model acquired by the three dimensional shape model holding unit (12) and the measurement data of the shape of the target object.

FIG. 2

**Description**

BACKGROUND OF THE INVENTION

Field of the Invention

The present invention relates to an information processing device, a measuring apparatus, a system, a calculating method, a storage medium, and an article manufacturing method.

Description of the Related Art

In recent years, a technique in which, in a production line of a factory and the like, an individual object is specified among objects loaded in bulk by using a vision system, a position and an orientation of the specified object is measured, and the gripping of the object is performed by a robot hand.

As one example of methods of measuring a three-dimensional position and orientation of an object, there is a model fitting method in which an approximate position and orientation of an individual object is detected from a shot image of a target object, and a three-dimensional shape model of the object is fitted to image data by using the position and the orientation to serve as an initial value. As a technique of the model fitting method, the method disclosed in Japanese Patent Application Laid-Open No. 2011-175477 is known in which model points sampled from a geometrical feature on the three-dimensional shape model of the target object are projected onto a distance image or a gray image of the target object, and then associated with the geometric feature on the image. Additionally, as a method of distinguishing an orientation of a target object having a shape that is prone to be erroneously recognized, the method disclosed in Japanese Patent Application Laid-Open No. 2015-194478 is known. In the method disclosed in Japanese Patent Application Laid-Open No. 2015-194478, a relation between a plurality of orientations that are prone to be erroneously recognized with each other is registered in advance, and an orientation that has been model-fitted from an approximate position and orientation is compared with an orientation calculated by using conversion parameters based on the advance registration, thereby outputting an orientation with a higher degree of coincidence.

In the methods disclosed in Japanese Patent Application Laid-Open No. 2011-175477 and Japanese Patent Application Laid-Open No. 2015-194478, although a process time is shortened as the number of model points is reduced by having a sparse sampling density, the degree of contribution to the calculation of the position and orientation estimation per point relatively increases, so that an accuracy of the position and orientation estimation lowers. If an object requiring the distinction of a difference in orientation or a difference in the type of objects by using a local shape as a clue is measured, erroneous recognition may occur due to the lack of geometric information of the part to be a clue on the three-dimensional model.

In contrast, if the sampling density is made dense and the number of model points is increased in order to increase the accuracy of the position and orientation estimation, a search time corresponding to the geometric feature on the image increases in proportion to the number of model points.

Japanese Patent Application Laid-Open No. 2011-179910 discloses a method of sampling model points to be used for model fitting, in which a face of the three-dimensional model is represented as a set of planes and curved faces, and sampling model points are generated for each small region when each face is divided by a unit area. In the method of Japanese Patent Application Laid-Open No. 2011-179910, while the sampling density is set low in a region estimated to have a small error in distance measurement, the sampling density is set high in a small region estimated to have a large error in distance measurement.

In Japanese Patent Application Laid-Open No. 2011-179910, the density of the model points for each small region is controlled in accordance with the error in the distance measurement. However, the small region in which the density is set high does not necessarily coincide with a part having a local shape serving as a clue for distinguishing the difference in orientation or the difference in the type of objects.

SUMMARY OF THE INVENTION

The present invention provides, for example, a measuring apparatus that can distinguish a position and an orientation of an object having a local shape at a high speed and with a high accuracy.

The present invention in its first aspect provides an information processing device as specified in claims 1 to 9. The present invention in its second aspect provides a measurement apparatus as specified in claim 10. The present invention in its third aspect provides a system as specified in claim 11. The present invention in its fourth aspect provides a calculating method as specified in claim 12. The present invention in its fifth aspect provides a storage medium as specified in claim 13. The present invention in its sixth aspect provides an article manufacturing method as specified in claim 14.

Further features of the present invention will become apparent from the following description of embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

BRIEF DESCRIPTION OF THE DRAWINGS

FIG. 1 illustrates a hardware configuration of an information processing device.

FIG. 2 illustrates a configuration of the information processing device.

FIG. 3 illustrates a three-dimensional shape model of a target object.

FIG. 4A and FIG. 4B are flowcharts illustrating a processing sequence for calculating a position and an orientation of the target object.

FIG. 5A to FIG. 5D are explanatory diagrams of a registration method of a similar orientation and a specific part.

FIG. 6A to FIG. 6C are explanatory diagrams for a registration of specific parts to be paired.

FIG. 7 is a conceptual diagram illustrating model points.

FIG. 8 is an explanatory diagram of a method for estimating an upper limit value of the number of measurement points in a geometric feature in the specific part.

FIG. 9A to FIG. 9E are explanatory diagrams of a position and orientation calculating method.

FIG. 10A and FIG. 10B are flowcharts illustrating a processing sequence for calculating the position and the orientation of the target object.

FIG. 11A and FIG. 11B are flowcharts illustrating the processing sequence for calculating the position and the orientation of the target object.

FIG. 12A to FIG. 12C are explanatory diagrams of a sampling method of the model points for each candidate for an approximate position and orientation.

FIG. 13A to FIG. 13D are diagrams illustrating the target object and a similar object.

FIG. 14A and FIG. 14B are flowcharts illustrating a processing sequence of distinction between the target object and the similar object.

FIG. 15 illustrates a configuration of a robot system.

DESCRIPTION OF THE EMBODIMENTS

(First embodiment)

In the present embodiment, a description will be given of a method of distinguishing a similar orientation with a high accuracy after model points are sampled in advance at a density sufficiently distinguishable, regarding a geometric feature included in a part (specific part) having a local feature, which serves as a clue for distinction of the similar orientation.

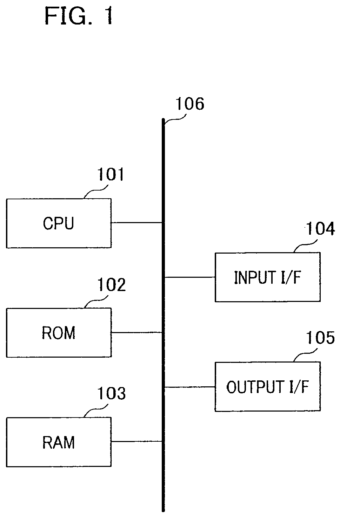

FIG. 1 illustrates a hardware configuration of an information processing device 100 according to the present embodiment.

A CPU 101 totally controls each device connected via a bus 106. The CPU 101 reads out and executes a process steps and a program stored in a ROM 102 that is a read-only memory. Each of a process program, a device driver, and the like according to the present embodiment, as well as an operating system (OS) are stored in the ROM 102, temporarily stored in a RAM (random access memory) 103, and appropriately executed by the CPU 101. An input I/F 104 inputs a signal acquired from an external device (for example, an imaging device and an operation device) as an input signal in a format that can be processed by the information processing device 100. An output I/F 105 outputs a signal from the information processing device 100 to an external device as an output signal in a format that can be processed by an external device (display device).

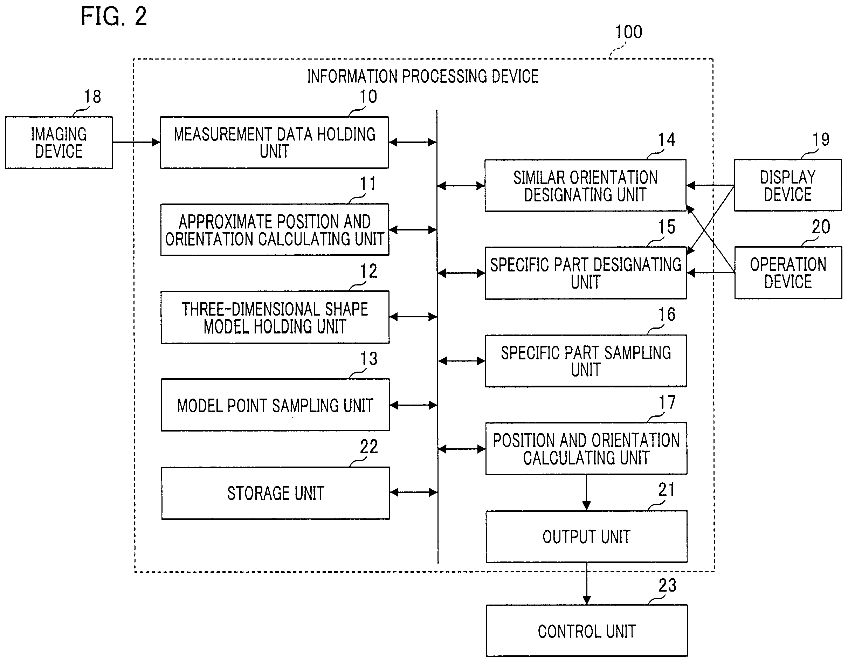

FIG. 2 illustrates a configuration of the information processing device 100 according to the present embodiment.

The information processing device 100 has each process unit and a storage unit 22. Each process unit includes a measurement data holding unit 10, an approximate position and orientation calculating unit (calculator) 11, a three-dimensional shape model holding unit 12, a model point sampling unit 13, a similar orientation designating unit 14, a specific part designating unit 15, a specific part sampling unit 16, a position and orientation calculating unit (calculator) 17, and an output unit 21. Additionally, the information processing device 100 is connected to an imaging device 18, a display device 19, an operation device 20, and a control unit 23 of the external device such as a robot. Note that, in the present embodiment, although the imaging device 18, the display device 19, the operation device 20, and the control unit 23 are configured outside the information processing device 100, the information processing device 100 may be configured as an integrated information processing device including the imaging device 18, the display device 19, the operation device 20, and the control unit 23.

Hereinafter, each unit of the information processing device 100 will be described.

The measurement data holding unit 10 acquires and holds the measurement data (measurement information) such as a grayscale image (two-dimensional information) and a distance image (three-dimensional information) of a target object imaged by the imaging device 18. In the present embodiment, although the measurement data holding unit 10 acquires the measurement data imaged by the imaging device 18, the present invention is not limited thereto, and it may acquire the measurement data obtained in advance, from a storage medium or the like.

The approximate position and orientation calculating unit 11 is an approximately calculating unit that calculates an approximate value of the position and orientation of the object (approximate position and orientation) in relation to the imaging device 18. Specifically, first, the measurement data is acquired from the measurement data holding unit 10 and a three-dimensional model of the target object is acquired from the three-dimensional shape model holding unit 12. Then, one individual object is detected from among the objects loaded in bulk in the measurement data, and an approximate value of the position and the orientation of the object in relation to the imaging device 18 is calculated.

In the imaging device 18, it is assumed a three-dimensional coordinate system (a reference coordinate system) serving as a reference of the measurement of the position and the orientation is defined. In the present embodiment, a coordinate system in which the center of the sensor used in the imaging device 18 is the origin, the horizontal direction of the image to be acquired is the x axis, the vertical direction of the image to be acquired is the y axis, and the optical axis of the sensor is the z axis is defined as a reference coordinate system. The position and the orientation of the object in relation to the imaging device 18 represent the position and the orientation of the object in the reference coordinate system.

In the present embodiment, the approximate position and orientation of the one individual in the reference coordinate system is calculated by performing pattern matching by using an image that has been observed from a plurality of viewpoints with respect to the distance image and the grayscale image acquired by the sensor to serve as a template. However, another method of recognizing the approximate position and orientation may be used. For example, if the relative position and orientation of the target object to the reference coordinate system is known and its position and orientation does not change, a coordinate system in which an optional position in a space where the target object exists serves as the origin may be used as a reference. In addition, any method other than the one described here may be used if a method that enables detecting one or more individual object from the bulk and calculating the three-dimensional position and orientation thereof is used. In the present embodiment, an object that is prone to be erroneously recognized is targeted if the target object is rotated around a predetermined axis, so that the position and the orientation acquired here may be erroneously recognized. The information about the approximate position and orientation calculated by the approximate position and orientation calculating unit 11 is input to the position and orientation calculating unit 17.

The three-dimensional shape model holding unit 12 acquires and holds the three-dimensional shape model of the target object to be subjected to bulk picking. Accordingly, the three-dimensional shape model holding unit 12 functions as an acquiring unit and a holding unit of the three-dimensional shape model. For example, as the three-dimensional shape model, a polygon model in which the three-dimensional shape of the target object is approximately represented by a combination of a plurality of polygons can be used. Each polygon is configured by a position in the three-dimensional coordinates on the surface of the target object and connection information for each point for configuring a polygon approximating the face. Note that although the polygon is typically configured of a triangle, it may be configured of a rectangle or a pentagon. In addition, any polygon model may be used if it can approximately represent the object shape by the three-dimensional coordinates of the surface point and its connection information. Alternatively, a model that represents a shape with a set of segmented parameter curved faces, which is referred to as "boundary representation (B-rep)" such as CAD data, may be used as the three-dimensional shape model. In addition, any other mode may be used if it can represent the three-dimensional shape of the object. Note that it is assumed that a model coordinate system serving as a reference representing coordinates of points on the surface of the target object is set in advance in the three-dimensional shape model.

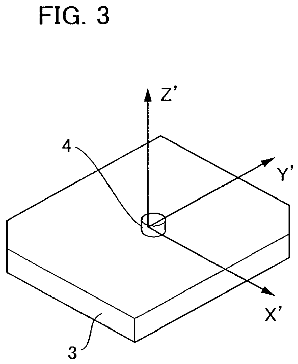

FIG. 3 illustrates a target object 3 having a geometric feature 4 and its model coordinate system, used in the present embodiment. The model coordinate system is shown by the X' axis, the Y' axis, and the Z' axis with the point on the surface of the target object 3 serving as the origin. The three-dimensional shape model holding unit 12 is configured by a memory such as a ROM 102 and a RAM 103, but may acquire the three-dimensional shape model from a storage medium and the like. The three-dimensional shape model that has been held is input to the approximate position and orientation calculating unit 11, the model point sampling unit 13, the similar orientation designating unit 14, the specific part designating unit 15, and the position and orientation calculating unit 17.

The model point sampling unit 13 performs sampling of the model points based on the information of the three-dimensional shape model acquired from the three-dimensional shape model holding unit 12. The sampling of the model points is performed at a density allowing calculation of the position and the orientation of the target object 3, based on the information about the three-dimensional shape model. In the model point sampling unit 13, a process of selecting model points to be used among the sampled model points may be further performed based on the information of the approximate position and orientation input from the approximate position and orientation calculating unit 11.

The model point sampling unit 13 performs, in particular, a process below as a process of selecting the model points to be used. First, the three-dimensional shape model is rendered from all directions, and the geometric feature 4 of the three-dimensional shape model viewed from each direction is registered in association with each direction. Next, the model points corresponding to the selected geometric feature 4 are selected by selecting the geometric feature 4 registered in the direction closest to the visual axis vector calculated from the approximate position and orientation of the object and the shooting parameters. As a method of selecting the model points from the shooting parameters and the approximate position and orientation, a method of calculating information about a normal line in addition to three-dimensional coordinates for each point on the three-dimensional shape model and comparing the inner product of the visual axis vector and a normal line vector in each direction may be used. In this case, only the points at which the inner product value is negative, that is, the points at which the visual axis vector and the normal vector are opposed to each other, is registered.

Note that sampling of the model points by the model point sampling unit 13 may be performed based on a user instruction. That is, the user may manually perform the sampling of the points while referring to a GUI on which the three-dimensional shape model of the target object 3 is displayed. Additionally, with regard to the face configuring the three-dimensional shape model, the sampling may be performed to serve the center of each face as a model point. Further, based on the approximate position and orientation of the object, sampling of points so as to be uniform in the distance image that is the measurement data may be performed. Specifically, the three-dimensional shape model is projected onto a two-dimensional image based on the approximate position and orientation of the target object 3 and the shooting parameters of the imaging device 18, and the point on the three-dimensional shape model that has been uniformly sampled on the two-dimensional image is back-projected onto a three dimensional space. In addition, if the points can be calculated from the face of the three-dimensional shape model, the method is not particularly limited. Information about the model points sampled by the model point sampling unit 13 is input to the specific part sampling unit 16 and the position and orientation calculating unit 17.

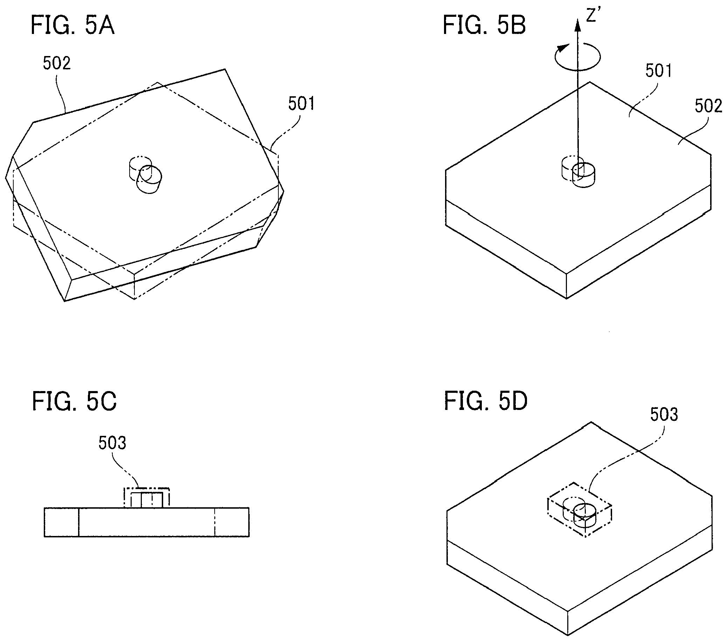

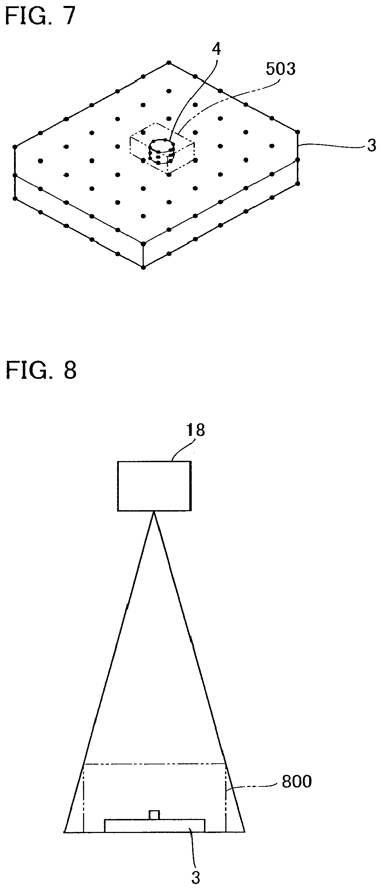

The similar orientation designating unit 14 displays the three-dimensional shape model of the target object 3 in a virtual three-dimensional space, designates the relation (conversion parameters) between two different orientations (similar orientations) that tend to be erroneously recognized for each other via the user's operation, and registers it in the storage unit 22. Examples of the similar orientation will be described below with reference to FIGs. 5A to 5D and FIG. 7. In the present embodiment, the similar orientation designating unit 14 transmits the three-dimensional shape model held by the three-dimensional shape model holding unit 12 to the display device 19, and renders two three-dimensional shape models of the target object 3 on the GUI of the display device 19.

Subsequently, the user's operation is acquired by the operation device 20 , and the two three-dimensional models are arranged in an orientation in which they are prone to be erroneously recognized with each other on the GUI of the display device 19. Then, the orientations of the two models at this time in the virtual three-dimensional space are acquired, conversion parameters between the similar orientations are calculated to be designated as similar orientations and recorded, thereby performing registration. The conversion parameters registered by the similar orientation designating unit 14 are input to the specific part designating unit 15 and the position and orientation calculating unit 17. Note that, in the present invention, the number of the designated similar orientations is not limited to two, and three or more similar orientations that are prone to be erroneously recognized to each other may be designated.

The specific part designating unit 15 designates a specific part including the geometric feature 4 to be a clue for distinction of the similar orientation registered in the similar orientation designating unit 14 and registers it in the storage unit 22. The specific part is a part including the geometric feature 4 with a remarkably different appearance in the two orientations having a relation of the similar orientation. Specifically, among the geometric features 4 forming one three-dimensional shape model, a part including the geometric feature 4 not overlapping with the geometric feature 4 forming another three-dimensional shape model is registered as the specific part (specific part 503 indicated by a two-dot line in Fig. 7). Registration of the specific part can be performed by rendering the three-dimensional shape model of the target object 3 input from the three-dimensional shape model holding part 12 to the GUI of the display device 19, and acquiring the part selected by the user's operation at the operation device 20. The information about the specific part registered by the specific part specifying part 15 is input to the specific part sampling unit 16 in order to sample the model data in the specific part.

The specific part designating unit 15 may perform a process of automatically registering the specific part by using the information about the relative positional relation between the three-dimensional shape model and the model points when the model point sampling unit 13 performs the model sampling , in addition to the information of the similar orientation. Specifically, the following process is performed. First, two three-dimensional shape models having a similar orientation relation in the virtual three-dimensional space are rendered. Next, model points for calculating the specific part are sampled from each three-dimensional shape model that has been rendered by using the information about the relative positional relation between the three-dimensional shape model and the model points. Regarding the sampled model points for calculating the specific part, the information about the three-dimensional coordinates in the virtual three-dimensional space and which one of the three-dimensional shape models is to be derived is held as the attribute information. Next, for each model point, a distance from neighboring model points having the attribute information different from the model points (distance between model points) is calculated. Here, if the minimum value of the distance between the model points has a certain length or more, it is determined to have a possibility of a specific part for the part where the point exists. As the final process of designating the specific part, a part including the geometric feature 4, which includes the model points for which the minimum value of the distance between the model points (distance between minimum model points) is equal to or greater than a certain value, is registered as the specific part.

The specific part sampling unit 16 performs the sampling of the model points inside the specific part at a density sufficiently distinguishable from the similar orientation based on the information about the specific part acquired from the specific part designating unit 15 and the information about the model points acquired from the model point sampling unit 13. As a sampling method, the sampling may be performed so as to be uniform on the face and the edge ridge of the three-dimensional model, or the sampling may be performed at random. Regarding the sampled model points, the correspondence relation with the geometric feature 4 (face or edge ridge) in the specific part that has been sampled is held in the storage unit 22 with the position information. Information about the correspondence relation with the model points of the specific part sampled by the specific part designating unit 15 is input to the position and orientation calculating unit 17.

The position and orientation calculating unit 17 calculates the position and the orientation (the position and orientation) of the target object 3 based on the acquired information. In the present embodiment, the information acquired by the position and orientation calculating unit 17 includes the measurement data (for example, a distance image, a grayscale image), a three-dimensional shape model, the approximate position and orientation, model points sampled by two methods, and the conversion parameters of similar orientation.

Specifically, first, the position and the orientation are calculated based on the approximate position and orientation so as to fit the three-dimensional shape model most and the target object 3 in the image. Subsequently, the position and orientation, which are in a relation that is prone to be erroneously recognized to the calculated position and orientation, are acquired based on the conversion parameters of the similar orientation, and the model fitting is separately performed using the position and the orientation as initial values. Subsequently, the evaluation values of the model fitting result are calculated and compared by using the model points included in the specific part, and the position and orientation of the one with the higher evaluation value is input to the output unit 21 as the final result.

The model fitting is performed by projecting the model points onto a distance image or a gray image and correcting the position and the orientation so as to fit the geometric feature on the image. With regard to the measurement data associated with the model points, the fitting may be performed by using either of a distance image or a gray image, or both of them.

The output unit 21 outputs the information about the position and the orientation of the target object 3 that has been calculated by the position and orientation calculating unit 17 to the external. As the output destination, the control unit 23 that controls the operation of the robot hand grasping the target object 3 and the like can be listed.

The imaging device 18 is preferably a sensor that acquires the measurement information necessary for recognizing the position and the orientation of the target object 3. For example, the imaging device 18 may be a camera that shoots a two-dimensional image, a distance sensor that shoots a distance image in which each pixel has depth information, or a combination thereof. As the distance sensor, there is a time-of-flight method using a light flight time and the like, in addition to the method of shooting the reflected light of the laser light and the slit light irradiated on the target object with a camera and measuring a distance by triangulation. Additionally, it is also possible to use the method of calculating the distance by triangulation from an image that is shot by a stereo camera. In addition, any sensor may be used if the information necessary for recognizing the three-dimensional position and orientation of the object can be acquired.

The imaging device 18 may be fixed, for example, upward or sideways to the target object, or may be provided in a robot hand and the like. In the present embodiment, a sensor that enables acquiring both the distance image and the grayscale image is used. As described above, the measurement data or the measurement information such as the grayscale image or the distance image to serve as the two-dimensional image acquired by the imaging device 18 is input to the measurement data holding unit 10. Note that a coordinate system set in the imaging device 18 is hereinafter referred to as a "sensor coordinate system".

The display device 19 acquires the three-dimensional shape model from the three-dimensional shape model holding unit 12 via the similar orientation designating unit 14 and displays it. Additionally, it may be possible to display the image acquired from the imaging device 18 and the position and the orientation calculated by the position and orientation calculating unit 17 and possible to have the user confirm it. For example, a liquid crystal display, a CRT display, and the like are used as the display device 19.

The operation device 20 is, for example, a keyboard and a mouse, and is used for inputting instructions from a user, in particular, the mouse is used for operating the GUI.

Note that the functions of the respective processing units included in the information processing device 100 are realized by the CPU 101 in FIG. 1 by loading the program recorded in the ROM 102 into the RAM 103 and executing the program. Additionally, the holding of data in each processing unit and the storage of data in the storage unit 22 are performed by memories such as the ROM 102 and the RAM 103 in FIG. 1.

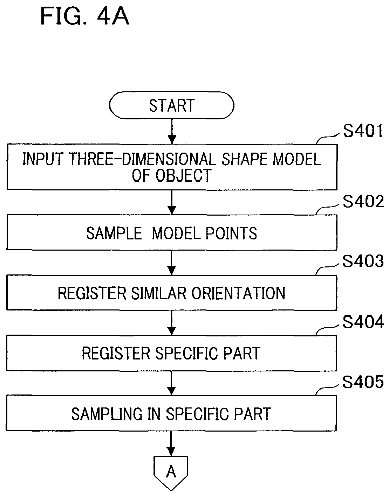

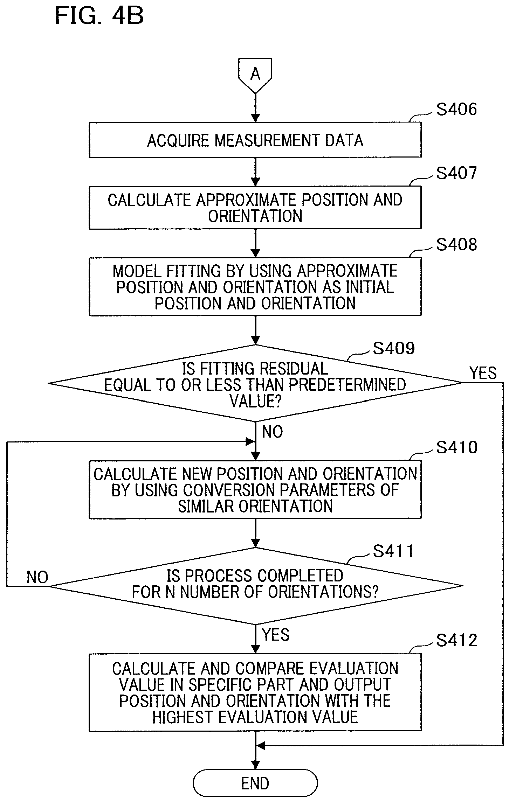

FIG. 4A and FIG. 4B are flowcharts illustrating a processing sequence that calculates the position and the orientation of the target object 3 in the present embodiment. In these flowcharts, first, as a preparation for position and orientation calculation, conversion parameters related to two positions and orientations (similar orientations) that are prone to be erroneously recognized are registered, and a specific part to be a clue for distinction is registered. Subsequently, the sampling of the model points is performed at a density so as to be a number that is distinguishable from the similar orientation for the registered specific part. Then, in calculating the position and the orientation, fitting is performed once based on the approximate position and orientation, and then the similar orientation is made based on the registered conversion parameters. Then, fitting is performed using the position and the orientation that have been made as an initial value, and the fitting results at the specific part are compared, and the position and the orientation with a higher evaluation value are adopted.

Details of each process will be described below.

(Step S401)

In step S401, the information processing device 100 acquires the three-dimensional shape model of the target object 3. The acquired three-dimensional shape model is held by the three-dimensional shape model holding unit 12. The model point sampling unit 13, the similar orientation designating unit 14, the specific part designating unit 15, and the position and orientation calculating unit 17 acquire the three-dimensional shape model of the target object 3 from the three-dimensional shape model holding section 12.

(Step S402)

In step S402, the model point sampling unit 13 samples model points based on the information of the input three-dimensional shape model. The points sampled at this time are used for performing model fitting in steps S408 and S410, to be described below. If the sampling of the model points for model fitting is performed, it is necessary to set in advance the parts on the three-dimensional shape model on which sampling is to be performed and the number of model points to be sampled (that is, the number of sampling points). With reference to the sampling information of the model points, although the number of sampling points is set in the present embodiment, a sampling density in performing the sampling on the face and/or the edge ridge line on the three-dimensional shape model may be alternatively set.

A part on the three-dimensional shape model on which the sampling is carried out is preferably set so as to, for example, carry out the entire three-dimensional shape model. By performing sampling on the entire model, it is expected to reduce the possibility of outputting an incorrect position and orientation by the model fitting. Additionally, if the target object 3 has a geometric feature greatly contributing to the model fitting, the setting may be limited to only a part where the geometric feature exists in the three-dimensional shape model, as a part in which the sampling is to be performed. The number of sampling points may be appropriately set within a range that satisfies desired conditions for the accuracy and the process time of the model fitting.

(Step S403)

In step S403, the similar orientation designating unit 14 registers the conversion parameters of the similar orientation representing a relation between two different orientations (first orientation and second orientation) that are prone to be erroneously recognized for each other. As a method of registering the orientation in the step, a method using the GUI as disclosed, for example, in Japanese Patent Application Laid-open No. 2015-194478, is used. At this time, the user operates the GUI by using the operation device 20 via the similar orientation designating unit 14.

FIG. 5A to FIG. 5D illustrates a similar orientation and the specific part in the three-dimensional shape model. The three-dimensional shape model holding unit 12 transmits the three-dimensional shape model to the display device 19, and the display device 19 displays a state in which the two three-dimensional shape models that have been acquired are arranged in the virtual space as shown in FIG. 5A. Here, one of the two displayed models is referred to as a reference model 501, and the other one is referred to as an operation model 502. The operation model 502 displayed on the display screen of the display device 19 is put in a state in which the operation model 502 is overlapped on the reference model 501 by the user operation via the information processing device 100, such that the appearance of the operation model 502 is similar to the reference model 501 while the reference model 501 and the operation model 502 have different orientations. FIG. 5B is the example for this state and the similar orientation can be made by rotating the operation model 502 by 180 degrees around the Z' axis of the model coordinate system from the state where the two models are completely overlapped. After making a similar orientation, the conversion parameters between the two three-dimensional shape models are calculated.

Here, the model coordinate systems set for the three-dimensional shape models of the reference model and the operation model are respectively referred to as a "reference model coordinate system" and an "operation model coordinate system". Furthermore, the coordinate system set in a virtual camera is referred to as a "virtual camera coordinate system". Note that the virtual camera coordinate system is set similarly for the reference coordinate system of the imaging device 18. At this time, a 3 × 3 rotation matrix that performs orientation conversion from the reference model coordinate system to the virtual camera coordinate system is denoted by "$R_{VB}$", and three rows of translation vectors that perform position conversion are is denoted by "$t_{VB}$". At this time, the conversion from the reference model coordinate system $X_B = [X_B,$

$Y_B$, $Z_B]^T$ to the virtual camera coordinate system $X_V = [X_V, Y_V, Z_V]^T$ can be represented as follows using the 4 × 4 matrix $T_{VB}$.

$$X_V' = T_{VB}X_B'$$

wherein,

$$X_V' = [X_V, Y_V, Z_V, 1]^T$$

$$X_B' = [X_B, Y_B, Z_B, 1]^T$$

[Formula 1]

$$T_{VB} = \begin{bmatrix} R_{VB} & t_{VB} \\ 0^T & 1 \end{bmatrix}$$

Hereinafter, $T_{VB}$ will be referred to as the "position and orientation of the reference model" (first position and orientation).

In contrast, the 3 × 3 rotation matrix that performs the orientation conversion from the operation model coordinate system to the virtual camera coordinate system is denoted by "$R_{VO}$", and three rows of translation vectors that perform the position conversion is denoted by "$t_{VO}$". At this time, the conversion from the operation model coordinate system $X_O = [X_O, Y_O, Z_O]^T$ to the virtual camera coordinate system $X_V = [X_V, Y_V, Z_V]$ can be represented as follows using the 4 × 4 matrix $T_{VO}$.

$$X_V' = T_{VO}X_O'$$

wherein,

$$X_O' = [X_O, Y_O, Z_O, 1]^T$$

$$X_V' = [X_V, Y_V, Z_V, 1]^T$$

[Formula 2]

$$T_{VO} = \begin{bmatrix} R_{VO} & t_{VO} \\ 0^T & 1 \end{bmatrix}$$

Hereinafter, Tvo will be referred to as the "position and orientation of the operation model" (second position and orientation).

The relative position and orientation between the two three-dimensional shape models are acquired from the position and orientation $T_{VB}$ of the reference model and the position and orientation Tvo of the operation model. Assuming that the relative position and orientation to be obtained is denoted by "$T_r$", $T_r$ can be obtained by the following.

$$T_r = (T_{VB})^{-1}T_{VO}$$

The calculated $T_r$ can be represented by total six parameters of three parameters representing the position and three parameters representing the orientation. Accordingly, values of the six parameters representing the position and the orientation are acquired from $T_r$, and a set of the values is added to a list as conversion parameters. Note that instead of the values of the six parameters, a set of the values of the sixteen parameters configuring a 4 × 4 matrix can be used as the conversion parameters. Alternatively, it may be possible that six parameters representing the position and the orientation of the reference model and six parameters representing the position and the orientation of the operation model are used as one set to serve as the conversion parameters. In addition, any parameter may be used as the conversion parameters if the relative position and orientation $T_r$ between the reference model and the operation model is recoverable, in other words, the position and the orientation between the two models can be converted to each other. Additionally, only three parameters representing an orientation may be used as the conversion parameters.

In the present embodiment, only one conversion parameter is registered. However, if a plurality of orientations that is prone to be erroneously recognized visually exists, the calculation of each conversion parameter and the addition of each conversion parameter to the list may be performed by executing the above-described operations a plurality of times. Although the method of registering the conversion parameters using the GUI has been described above, the GUI described here is an example, and the conversion parameters of the similar orientation (s) may be registered by using one besides the GUI. Furthermore, although the sampling method of the model points and the registration method of the similar orientation have been described, this process can be executed with the information about the three-dimensional shape model of the target object 3, so that, in the present embodiment, this process may be executed by replacing the order of steps S402 and S403.

(Step S404)

In step S404, the specific part designating unit 15 registers the specific part to be used for the distinction of the similar orientation registered in step S403. The method in which the user uses the GUI similar to the step S403 is employed for the registration of a specific part in the present embodiment. The user operates the GUI by using the operation device 20 via the specific part designating unit 15. In a state in which the two three-dimensional shape models having a similar orientation relation and a rectangular parallelepiped for registering the specific part are displayed on the display device 19, the user moves or enlarges and reduces the rectangular parallelepiped by using the operation device 20, selects a part surrounded by the rectangular parallelepiped, and registers the part as the specific part. At this time, with respect to the surface of the operation model observable from the virtual camera at the time of selecting the rectangular parallelepiped, an existence range in the depth direction in the rectangular parallelepiped designated on the screen is calculated, and the three-dimensional space defined by the calculated existence range and the rectangular parallelepiped on the screen is calculated. Then, the calculated three-dimensional space is reconverted into the model coordinate system based on the position and the orientation of the operation model with respect to the virtual camera and recorded.

For example, if the operation model is rotated by 180 degrees around the Z' axis of the model coordinate system as shown in FIG. 5B and the similar orientation is registered, the screen substantially coincides with the X'Z' plane of the target object 3 as shown in FIG. 5C, and then a specific part 503 is designated by the rectangular parallelepiped used for specifying the specific part. Since the geometric feature 4, which is a clue to distinguish the similar orientation, is a cylindrical shape on the surface of the target object 3, it is effective to provide the rectangular parallelepiped so as to include the cylindrical shape. As a result, as shown in FIG. 5D, a region of the rectangular parallelepiped is registered as the specific part 503. In the designation of the specific part 503, although a method using a rectangular parallelepiped is described in the present embodiment, the present invention is not limited to the rectangular parallelepiped, and a designation using other geometric shapes such as a circle, an ellipse, and a polygon may be performed.

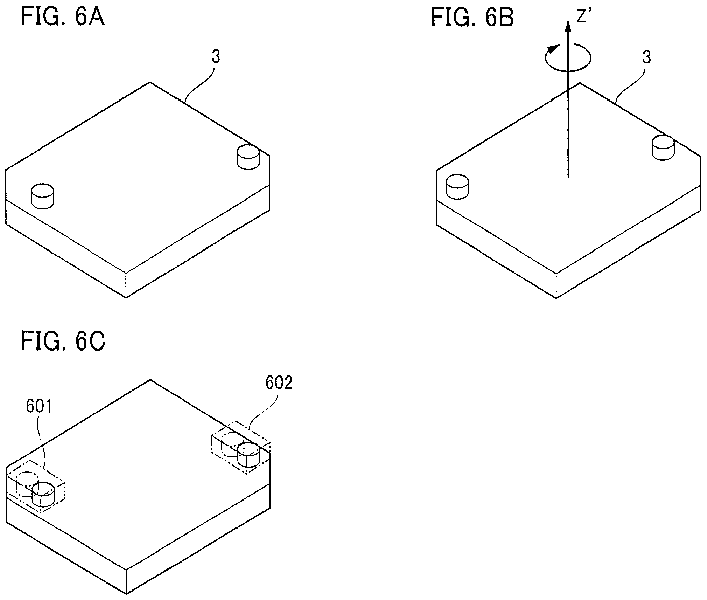

Additionally, if the specific part 503 is registered, a specific part to be paired may be newly calculated and recorded based on the similar orientation registered in step S402. For example, in the case of the target object 3 having such a shape as shown in FIG. 6A, it is effective for orientation distinction to register the similar orientation rotated by 180 degrees around the Z' axis of the model coordinate system as shown in FIG. 6B. In such a similar orientation, it is considered that the registration of the two regions as specific parts 601 and 602 as shown in FIG. 6C is effective, and these two regions are paired parts. That is, if the two specific parts 601 and 602 are registered as shown in FIG. 6C, it is necessary to record the specific parts for both of the two orientations in order to compare the evaluation values of similar orientations in calculating the position and the orientation. Accordingly, the three-dimensional space of the specific parts recorded by using the operation model is converted into the model coordinate system of the reference model where the similar orientation is arranged, based on the conversion parameters, and both three-dimensional spaces are recorded. Consequently, it is possible to record the specific parts to be compared for the two orientations having a relation of the similar orientation. Note that if a plurality of conversion parameters or specific parts is registered, the process is executed for each combination of the conversion parameters and specific parts. Although the method of registering the specific parts using the GUI has been described above, the GUI described here is an example and other methods may be used.

(Step S405)

In step S405, the specific part sampling unit 16 performs the sampling of the model points based on the information of the specific part registered in step S404. The sampled points here are used for the calculation of evaluation values in step S412 to be described below. If, in step S405, the model points for the distinction of sampling similar orientation are sampled, the part to be sampled is limited to the specific part.

Although the number of sampling points is set in advance, the setting value here must be a value equal to or larger than the number of sampling points necessary for distinguishing the similar orientation. Here, as the number of sampling points that has been set is larger, it is expected that the difference between the evaluation values calculated in step S411, to be described below, becomes larger, so that it is easy to distinguish the similar orientations. FIG. 7 illustrates the model points sampled for the entire target object 3 in step S402 and the model points sampled for the inside of the specific part 503 including the geometric feature 4 in step S405. There are differences in density of the model points between the model points sampled for the entire the target object 3 and the model points sampled for the specific part 503, by which the density of the model points sampled inside the specific part is set higher. The model points sampled for the specific part 503 are generated at a density higher than the model points sampled in the entire target object 3 (a part other than the specific part 503), so that similar orientations can be easily distinguished.

The setting value of the number of sampling points is preferably, for example, the upper limit value of the number of the measurement points that can exist in a part registered as the specific part in the measurement data acquired by the imaging device 18. The upper limit value of the number of the measurement points is a value determined by as a resolution of the imaging device 18 and an image capturable range of the imaging device 18 that can acquire the measurement data of the target object 3. FIG. 8 is an explanatory diagram of a method of estimating the upper limit value of the number of measurement points in the geometric feature 4 in the specific part. As shown in FIG. 8, it is possible to estimate the size of the geometric feature 4 of the target object 3 on the acquired image (the length of the edge ridge line and the number of pixels corresponding to the area of the face) by arranging the target object 3 within an image capturable range 800 of the imaging device 18 in the virtual three-dimensional space. In contrast, the density of the measurement data extracted from the acquired image cannot exceed the resolution of the image. Therefore, it is possible to estimate the upper limit value of the number of measurement points in the geometric feature 4 in the specific part based on the information about the size on the image of the geometric feature 4 and the information about the resolution of the imaging device 18. It is expected that the sufficient number of the model points to distinguish the similar orientation can be secured by setting the number of sampling points as described above.

Although the two methods for each usage regarding the sampling of the model points in the specific part 503 have been described, the setting parameters for the sampling of the model points are not limited to the number of sampling points, in a manner similar to step S403. Specifically, the sampling density in the specific part may be set as a setting parameter for the sampling. Additionally, if a plurality of parts is registered as the specific parts in step S403, the upper limit value of the number of measurement points may be calculated for each of the registered specific parts by the above-described method, and the value may be used as the setting value of the number of sampling points.

(Step S406)

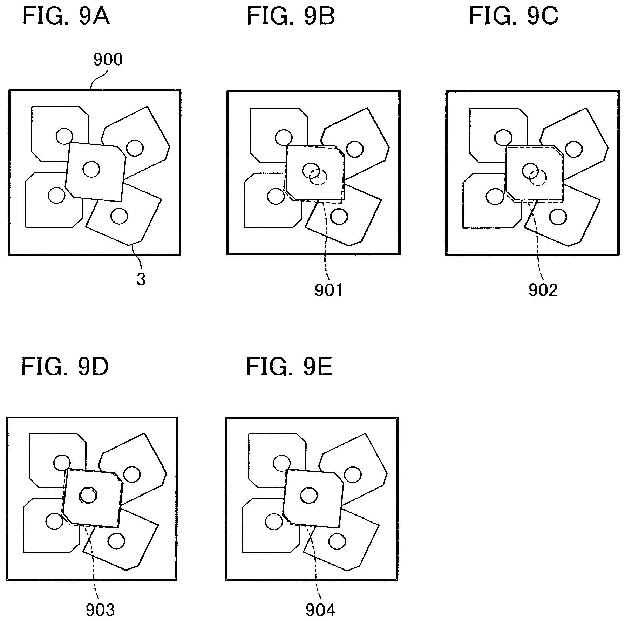

In step S406, the measurement data holding unit 10 acquires the distance image and the grayscale image of the target object 3 captured by the imaging device 18. FIG. 9A illustrates an image 900 that has been captured. Note that, in the present embodiment, the measurement data is acquired after the sampling of the model points. However, if the imaging has been performed by the imaging device 18, the acquisition of the measurement data may be performed anywhere in the series of processes from step S401 to step S405.

(Step S407)

In step S407, the approximate position and orientation calculating unit 11 detects one individual object from among many bulked target objects existing in the captured image, and calculates and record six parameters representing the approximate position and orientation of the target object 3 in the sensor coordinate system. In the coordinate conversion from the model coordinate system to the sensor coordinate system based on the six parameters calculated here, a $3 \times 3$ rotation matrix represented by three parameters representing the orientation is denoted by "$R_{SM}$", and three rows of the translation vectors represented by three parameters representing the position is denoted by "$t_{SM}$". In this context, the conversion from the model coordinate system $X_M = [X_M, Y_M, Z_M]^T$ to the sensor coordinate system $X_S = [X_S, Y_S, Z_S]^T$ can be represented as follows by using the $4 \times 4$ matrix $T_0$'.

$$X_S' = T_0' \ X_M'$$

wherein,

$$X_S' = [X_S, \ Y_S, \ Z_S, \ 1]^T$$

$$X_M' = [X_M, \ Y_M, \ Z_M, \ 1]^T$$

[Formula 3]

$$T_0' = \begin{bmatrix} R_{SM} & t_{SM} \\ 0^T & 1 \end{bmatrix}$$

Hereinafter, To' will be referred to as the approximate position and orientation. FIG. 9B illustrates the result for projecting the three-dimensional shape model on the shot image based on the approximate position and orientation To'. The projected three-dimensional shape model is a dotted line 901.

(Step S408)

In step S408, the position and orientation calculating unit 17 calculates the position and the orientation of the target object 3 by performing the model fitting of the three-dimensional model and the target object 3 in the image by using the approximate position and orientation To' to serve as an initial value. Specifically, the three-dimensional shape model is projected onto the shot image based on the parameters of the imaging device and the approximate position and orientation. Additionally, the feature of the projected three-dimensional shape model is associated with the feature of the target object 3 in the image to reduce a residual, and the position and the orientation of the target object 3 are calculated. The position and the orientation of the target object 3 with a high accuracy are calculated. Here, the $4 \times 4$ rotation matrix that can be represented by the six parameters of the calculated position and orientation and performs coordinate conversion from the model coordinate system to the sensor coordinate system is denoted by "To". Here, FIG. 9C illustrates the result for the projection of the three-dimensional shape model onto the captured image, based on the position and orientation To after fitting. The projected three-dimensional shape model is a dotted line 902. In this example, the approximate position and orientation calculating unit 11 detects an incorrect individual object. Accordingly, even if the position and orientation calculation with a high accuracy is performed in the present step, the correct position and orientation is not calculated.

(Step S409)

In step S409, the position and orientation calculating unit 17 calculates an evaluation value for the position and the orientation calculated in step S408, compares the evaluation value with a predetermined threshold value to determine whether or not the position and the orientation are correct, and determines whether or not the subsequent processes will be performed. For example, a three-dimensional distance between the geometric feature on the model surface in the position and the orientation after fitting and the geometric feature in the image is assumed to be the residual (acquisition of the deviation amount). Then, the average value E of the residuals of all the geometric features can be used as a score.

If the calculated average value E of the residuals is smaller than the predetermined threshold value (for example, 0.1 mm), it is determined that the correct position and orientation can be derived, and the present process ends. In contrast, if the average value of the residuals is larger than the threshold value, it is determined that the incorrect position and orientation has been obtained, and the process proceeds to step S410. The threshold value may be, for example, set in advance by the user. Additionally, the method of determining whether the position and the orientation are correct or not is not limited to this. For example, based on the calculated To, the normalized cross-correlation coefficient R of the luminance in the object part between the image rendered by projecting the model and the captured image may be obtained and used. In this case, if R is larger than a predetermined value (for example, 0.9), the process proceeds to step S411. In contrast, if R is smaller the predetermined value, the process proceeds to step S408. Note that if rendering is performed by projecting a model in this method, it may be possible that the surface characteristics of the target object 3 are taken into account to be reflected in the calculation of luminance. Moreover, any method may be used if a method that enables clearly distinguishing whether or not the position and the orientation calculated in step S408 are correct is used. Note that it may be possible that this process is omitted and the process inevitably proceeds to step S410.

(Step S410)

In step S410, the position and orientation calculating unit 17 generates a new candidate for the position and the orientation by using the position and orientation To and each of N sets of conversion parameters acquired from the similar orientation designating unit 14. First, a relative position and orientation that is recoverable from the conversion parameters is denoted by "$T_{r\_i}$ (i = 1 to N)", and a new candidate for the position and orientation made by using each of them is denoted by "$T_i$'". $T_i$' is calculated as follows.

$$T_i{'} \ = \ T_0 T_{r\text{-}i}{}^{-1}$$

FIG. 9D illustrates a state in which the three-dimensional shape model is projected onto the shot image based on the new candidate for the position and orientation $T_i$'. The projected three-dimensional shape model is shown by a dotted line 903. Next, the position and orientation calculating unit 17 calculates (derives) the position and the orientation of the target object 3 such that the shot image fits the three-dimensional shape model in a manner similar to step S408, by using the position and orientation $T_i$' of the generated new candidate to serve as an initial value. The position and the orientation calculated here are denoted by "$T_i$".

(Step S411)

In step S411, the position and orientation calculating unit 17 determines whether or not the calculation of the N number of the position and orientation $T_i$ generated in step S409 has been completed. If the calculation of N number of $T_i$ has been completed, the process proceeds to step S412, and if not, the process returns to step S410. Note that the process in step S410 may be executed in parallel with respect to the N number of the new candidates for the position and orientation.

(Step S412)

In step S412, the position and orientation calculating unit 17 calculates the evaluation value based on the sampling information of the specific part determined in step S305 with respect to the (N + 1) number of the position and orientation Ti (i = 0 to N), which has been calculated in step S410. Specifically, the evaluation value is calculated based on the degree of coincidence between the model points and the measurement points of the specific part. The position and orientation calculating unit 17 then outputs the position and the orientation corresponding to the best evaluation value among the calculated evaluation values as the final position and orientation of the target object 3.

As the evaluation value used here, a residual may be used in a manner similar to step S409, or the normalized cross-correlation between an image on which the target object is projected based on the calculated position and the orientation and a shot image may be used. In addition, any method may be used if the method of clearly distinguishing correct or incorrect positions and orientations based on the evaluation value is used. FIG. 9E illustrates a state in which the two positions and orientations, To and Ti, are evaluated, and Ti is output as the final position and orientation. The final position and orientation output at this time is the position and orientation shown by a dotted line 904.

As described above, in the first embodiment, a method of performing the model fitting and the distinction of the similar orientation by using the sampled model points after sampling the model points in advance with the setting value in accordance with the specific part has been described. By using this method, the distinction of a difference in orientation between the target objects having a different local part shape is possible at a high speed and with a high accuracy.

(Second Embodiment)

In the first embodiment, parameters are set so as to sample as many model points as possible for the specific part. The larger the number of model points is, the easier the distinction of the similar orientation is, whereas a process time for calculating the evaluation values increases. If the number of sampling points or the setting value of the sampling density is excessive, a situation in which clear distinction of the similar orientation and the process time cannot be compatible may be caused. Accordingly, in the present embodiment, the number of sampling points or the sampling density is determined so that the number of model points to be sampled is equal to or less than a predetermined reference value that enables suppressing an increase of the process time while maintaining the accuracy of the distinction. Specifically, after performing the sampling of the specific part, a process of distinguishing whether or not the number of sampled points is excessive and thinning out the excessive number of sampled points is additionally performed. Since the configuration of the information processing device 100 according to the present embodiment is similar to that of the first embodiment, the description thereof will be omitted.

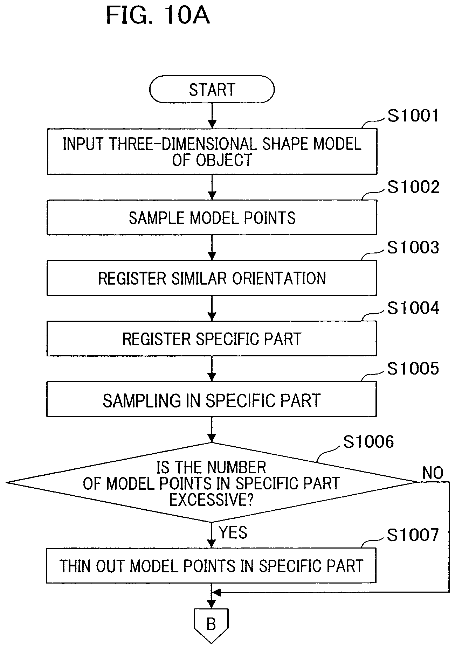

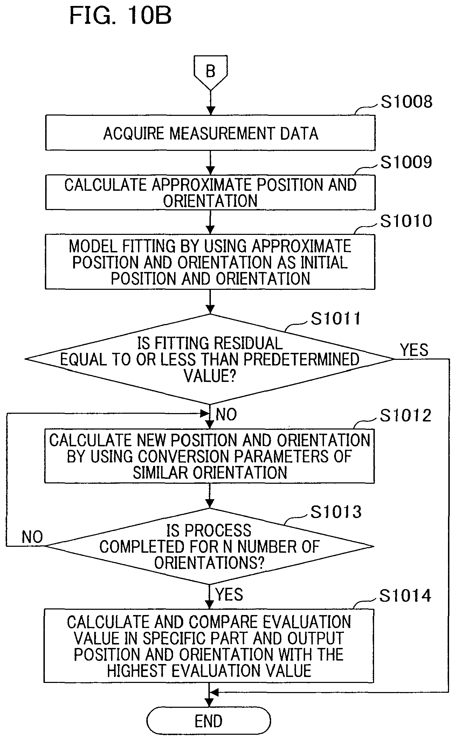

Next, the processing sequence of the present embodiment will be described. FIGs. 10A and 10B illustrate the processing sequence of calculating the position and the orientation of the target object 3 in the present embodiment. In FIG. 10A, steps S1001 to S1005, are the same as the processed of steps S401 to S405 in the first embodiment, and thus the description thereof will be omitted. Additionally, steps S1008 to S1014 in FIG. 10B are the same as the processes from step S406 to step S412 in the first embodiment, and the description thereof will also be omitted.

(Step S1006)

In step S1006, the specific part sampling unit 16 compares the number of model points sampled in step S1005 with the predetermined reference value of the model points to be sampled, and determines whether or not the number of model points is excessive. The predetermined reference value of the number of model points (hereinafter also referred to as "sampling reference point number") may be set irrespective of the area, but it may be set in stages for each observed area. Here, the number of the sampling reference points is a parameter set in advance. The number of the sampling reference points is set within a range in which the similar orientation can be distinguished and a series of processes can be executed within a desired process time.

As a method of distinguishing whether or not the number of model points in the specific part is excessive, for example, there is a method of counting the number of generated model points if a sampling process is performed. In step S10 06, if the number of model points in the specific part is larger than the number of reference model points, it is determined that the number of model points is excessive, and the process proceeds to step S1007. In contrast, if the number of model points in the specific part is equal to or less than the number of reference model points, the process proceeds to step S1008.

(Step S1007)

In step S1007, the specific part sampling unit 16 performs a process of thinning out model points determined to be excessive so that the number of model points is equal to or less than the predetermined reference value. As a method of thinning out the model points, for example, there is a method of thinning the model points so as to distribute the model points in the specific part at equal intervals as much as possible. Specifically, first, an ideal value of a distance between the model points assuming a case in which the model points are uniformly distributed, which are the model points after thinning out, based on the information about the sampling reference value and the information about the area and the length of the ridge line of the geometric feature included in the specific part, is calculated. Next, for each model point actually sampled in the specific part, the distance from the nearest model point is calculated. If the distance is shorter than the ideal value, either one of the two model points used for the calculation of the distance is thinned out. It is possible to thin out the model points so as to distribute the model points at roughly equal intervals by sequentially performing this process for all model points. Additionally, as another method of thinning out the model points, a method of randomly thinning-out the model points may be used.

Although the number of sampling reference points is set for the setting parameters concerning the thinning-out of the model points, the density of the model points on the face and the edge ridge on the three-dimensional shape model after performing the thinning-out process (hereinafter, referred to as "sampling reference density") may be set. In this case, as a method of thinning out excessive model points, first, the specific part is divided for each predetermined surface area, and an ideal value of the number of model points existing in the region (hereinafter, also referred to as "the number of in-region reference model points") is calculated based on information about the sampling reference density. Subsequently, for each divided region, the number of model points actually existing in the region is counted, and if the number of model points is larger than that of the number of in-region reference model points, the number of excessive model points is thinned out in each region. It is possible to thin out the model points so that the model points are distributed almost uniformly by performing this process.

Although the processing sequence in the present embodiment has been described above, it is not necessary to perform the processes of step S1006 and step S1007, which are the characteristic processes in the present embodiment, immediately after step S1005. That is, the processes may be carried out at an optional timing from the time when the model points in the specific part is made in step S1005 to the time when the model points are used for calculating the evaluation value for the position and the orientation of the target object in step S1014. Additionally, if a plurality of specific parts is designated, a process of distinguishing as to whether the number of model points is excessive for each designated specific part and thinning-out the model points may be performed.

As described above, after performing the sampling of the specific part, a process of distinguishing whether or not the number of sampled points is excessive and thinning out the excessive number of points is additionally performed, and as a result, an increase of the processing time can be suppressed while maintaining the accuracy of the distinction.

(Third Embodiment)

In the first embodiment and the second embodiment, the model points are uniquely sampled by the number contemplated to be optimal for the registered specific part, and the sampled model points are used for the distinction of the similar orientation. In these embodiments, it is assumed that the target object takes only limited orientations to some extent on the shot image and is observed with the same size to some extent. However, if the measurement range is large to some extent and the target object is arranged in a bulk-loaded state, the target object can take various orientations, and the target object may be observed with various sizes on the image within the measurement range of the imaging device 18. In that case, the number of model points sampled in the first embodiment and the second embodiment is not necessarily optimal, and the sampling of an excessive number of model points may be caused depending on the arrangement of the target object. In the present embodiment, optimal model points are selected and used for the distinction of the similar orientation, depending on where the target object is arranged within the measurement range. Specifically, which model points are to be sampled is set in advance depending on the value of the approximate position and orientation of the target object, and the corresponding model points are selected and used for the distinction of the similar orientation based on the information about the calculated approximate position and orientation. By using this method, the distinction of the similar orientation under an optimal condition is possible even if the target object takes various positions and orientations within the measurement range. Since the configuration of the information processing device 100 according to the present embodiment is the same as that of the first embodiment, the description thereof will be omitted.

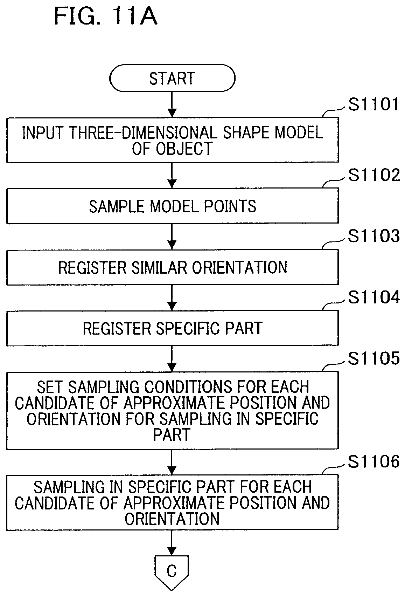

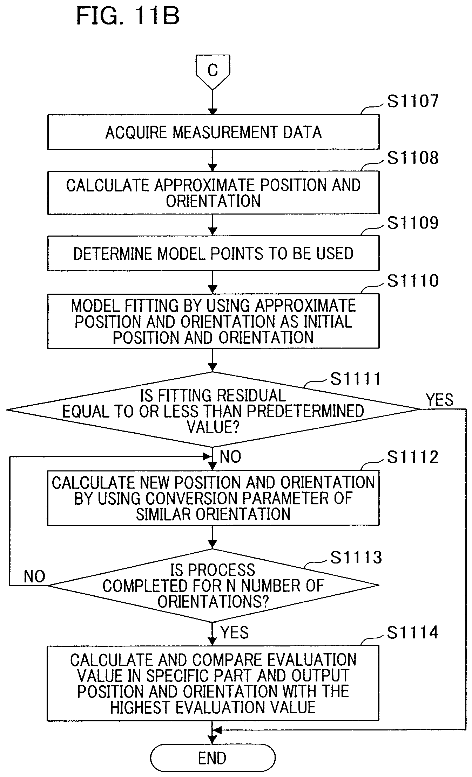

The processing sequence of the present embodiment will be described. FIG. 11A and FIG. 11B illustrate the processing sequence of the calculation of the position and the orientation of the target object in the present embodiment. In FIG. 11A, since the processes from step S1101 to step S1104 are the same as those from step S401 to step S404 in the first embodiment, the description thereof will be omitted. Additionally, since the processes of steps S1107 and S1108 in FIG. 11B are the same as those of steps S406 and S407 in the first embodiment, the description thereof will also be omitted. Furthermore, since the processes from step S1110 to step S1114 in FIG. 11B is the same as those from step S408 to step S412 in the first embodiment, the description thereof will be omitted.

(Step S1105)

In step S1105, the specific part sampling unit 16 sets the approximate position and orientation that sets the model points (hereinafter referred to as a "candidate of the approximate position and orientation") and a sampling condition for each candidate for the approximate position and orientation. The sampling condition includes, for example, the sampling density in the specific part and the number of model points to be sampled. As a method of setting the sampling condition, for example, there is a method of setting the sampling condition for each position of the target object within the measurement range.

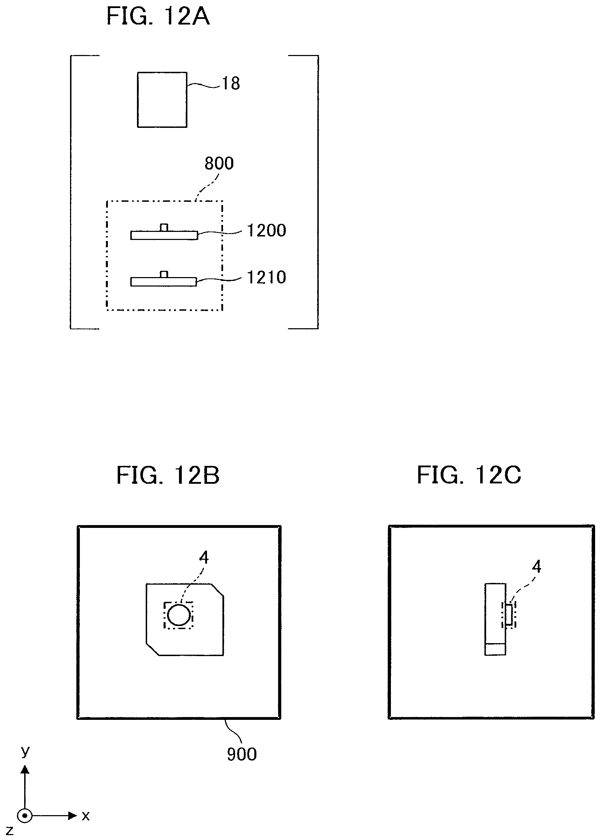

FIGs. 12A to 12C are explanatory diagrams illustrating a sampling method of the model points for each candidate for the approximate position and orientation.

In FIG. 12A, as viewed from the imaging device 18, a target object 1200 is placed at the front in the image capturable range 800, and a target object 1210 is placed at the rear. In this case, the target object 1200 placed at the front is larger than the target object 1210 placed at the rear. Accordingly, even if the target object 1200 placed at the front is lower in density of the model points than the target object 1210 placed at the rear, the distinction of the similar orientation is possible. Hence, in the case shown in FIG. 12A, it is effective to set the sampling density of the model points at the front of the imaging device lower than the sampling density of the model points at the rear. The number of candidates of the approximate position and orientation is not limited to two, and any number may be set. In that case, it is effective to set the sampling density low if the target object that is placed is at a position that is advantageous in the distinction of the similar orientation (for example, a position where the geometric feature is observed to be large). In contrast, if the target object that is placed is at a position that is disadvantageous in the distinction of the similar orientation (for example, a position where the geometric feature is observed to be small), it is effective to set the sampling density high.

The sampling condition may be set not only for the position within the measurement range but also for each orientation of the target object. For example, as shown in FIG. 12B, $4 \times 4 \times 4 = 64$ orientations obtained by the rotation by 90 degrees around each axis of xyz from the observed orientation serve as the candidates for the approximate position and orientation, and the sampling densities can be set based on each view of the geometric feature 4 in the specific part in each orientation. As an example, the orientation observed as shown in FIG. 12C, which is rotated by 90 degrees around the y axis from the orientation of FIG. 12B, is shown. In FIG. 12B, the geometric feature 4 in the specific part is observed to be larger. In such a case, it is effective to set the sampling density in the orientation shown in FIG. 12B lower than the sampling density in FIG. 12C. In a similar manner, also regarding the remaining orientations, the view of the geometrical feature 4 in the specific part on the shot image is different. Hence, in an orientation advantageous in the distinction of the similar orientation (for example, an orientation in which larger portion of the geometric feature 4 is observed), it is effective to set the sampling density low, and in an orientation that is disadvantageous in the distinction of the similar orientation (for example, an orientation in which smaller portion of the geometric feature 4 is observed), it is effective to set the sampling density high. Note that, in the present embodiment, as an example, the description has been given of the case of the rotation by 90 degrees around each axis of xyz, but the present invention is not limited thereto and a sampling density may be set for any orientation.

Although two methods of setting the sampling conditions for each candidate for the approximate position and orientation have been described above, these methods may be combined. For example, if a case in which, regarding the position, two positions as shown in FIG. 12A are assumed, and regarding the orientation, 64 types of the orientations obtained by rotating the orientation of the target object by 90 degrees around each axis of xyz, is assumed, total 128 types of the candidates for the position and orientation can be assumed. It is possible to distinguish the similar orientation with optimal conditions for more positions and orientations by setting the number of sampling points for each of these 128 types of candidates for the approximate position and orientation.

As a method of setting the number of sampling points, although a method of setting the value of the sampling density itself for each position, each orientation, or each candidate for the approximate position and orientation combining them may be used, other methods may also be used. For example, only a candidate for the approximate position and orientation to be the reference (hereinafter, referred to as "position and orientation reference") and the sampling density thereof in the position and orientation reference are set in advance. Subsequently, regarding the other candidates for the approximate position and orientation, a difference from the position and orientation reference or a ratio from the number of sampling points in the position and orientation reference may be set. Additionally, the sampling condition may be set for one candidate for the approximate position and orientation, but the present invention is not limited thereto, and the shared sampling conditions may be set for a plurality of candidates for the approximate position and orientation. Additionally, the present invention is not limited to the method of setting the sampling condition in association with the candidate for the approximate position and orientation, and the method of setting the sampling condition in association with the region within the measurement range or the range of the orientation may be used.

(Step S1106)

In step S1106 of FIG. 11A, the specific part sampling unit 16 performs the sampling of the model points for each candidate for the approximate position and orientation in accordance with the sampling condition set in step S1105. The information about the sampled model points is associated with the candidate for the approximate position and orientation. The information about the candidate for the approximate position and orientation and the information about the model points associated thereto are transmitted to the position and orientation calculating unit 17, and it is determined which model points are to be used in step S1109, which is a process to be described below.

(Step S1109)

In step S1109, the position and orientation calculating unit 17 determines which model point is to be used for the distinction of the similar orientation based on the information about the approximate position and orientation calculated in step S1108. As a method of determining the model points to be used, collation between the approximate position and orientation calculated in step S1108 and the candidates for the approximate position and orientation set in step S1105 is performed. If one candidate that is coincident with the approximate position and orientation calculated in step S1108 is found from among the candidates for the approximate position and orientation, the model points associated with the one candidate for the approximate position and orientation are used for the distinction of the similar orientation. If one candidate that is coincident with the approximate position and orientation calculated in step S1108 is not found from among the candidates for the approximate position and orientation, one candidate for the approximate position and orientation that is nearest is selected, and the model points associated therewith are used for the distinction of the similar orientation.

As described above, according to the present embodiment, it is possible to select corresponding model points based on the information about the approximate position and orientation and distinguish the similar orientation, so that, in the measurement of the target object with various positions and orientations, the accuracy of the distinction and the restraining of the process time are compatible.

(Fourth Embodiment)

In the first embodiment, the second embodiment, and the third embodiment, the method of distinguishing the objects with the same shape for which the orientation is prone to erroneously recognize, has been described. In the present embodiment, a method of distinction between the target object and the similar object partially different in shape will be described.

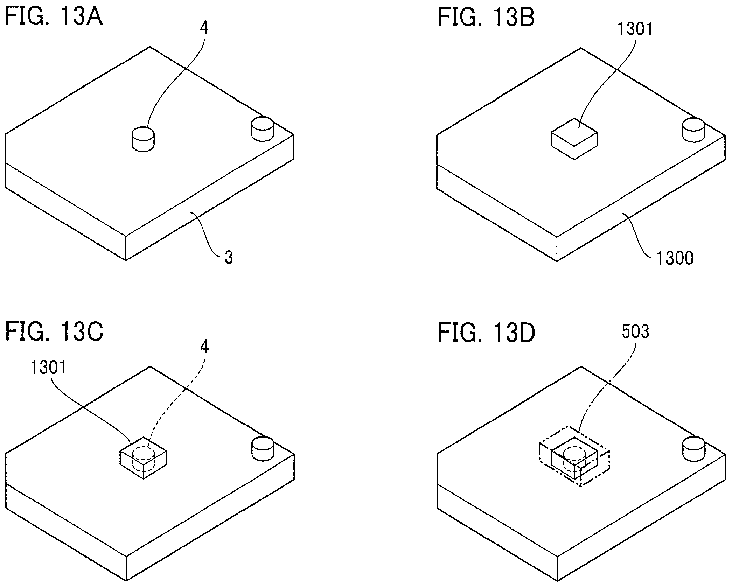

FIG. 13A to FIG. 13D illustrate the target object 3 and the similar object. In the present embodiment, the distinction between the target object 3 having a shape as shown in FIG. 13A and the similar object 1300 having a shape as shown in FIG. 13B is assumed. The target object 3 and the similar object 1300 are different in a part of the shape (the geometric feature 4 of the target object 3 and a geometric feature 1301 of the similar object 1300), for example, if the similar object is mixed in the bulk with the target object 3, an erroneous recognition may occur. In order to prevent such an erroneous recognition, first, the three-dimensional shape model of the similar object is also input, in addition to the three-dimensional shape model of the target object 3, and the relative orientation that may cause erroneous recognition between the target object 3 and the similar object 1300 is registered, and then the specific part 503 to be a clue of the distinction is registered. FIG. 13C and FIG. 13D illustrate an example of the specific part 503 to be registered. Thereafter, the model points in the specific part 503 are respectively sampled in the three-dimensional shape model of the target object 3 and the similar object 1300, the model fitting is performed for the object observed on the shot image, and an evaluation value in the specific part 503 is calculated. Subsequently, the evaluation value in the specific part 503 using the model points of the target object 3 is compared with the evaluation value in the specific part 503 using the model points of the similar object 1300, so that the target object 3 and the similar object 1300 are distinguished. Note that since the configuration of the information processing device 100 according to the present embodiment is similar to that of the first embodiment, the description thereof will be omitted.

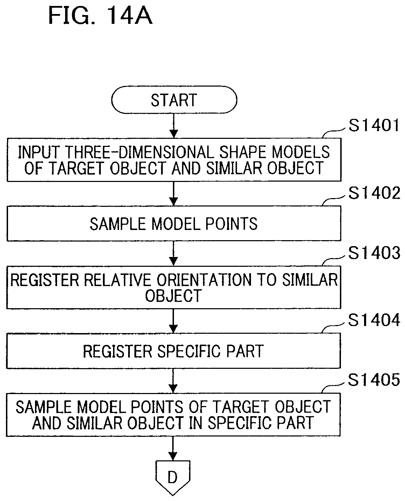

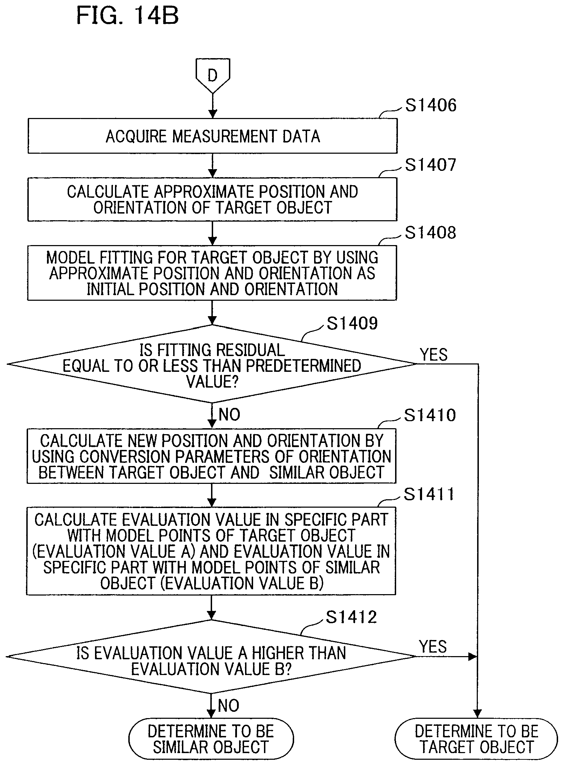

Next, the processing sequence of the present embodiment will be described. In FIG. 14A and FIG. 14B, the processing sequence of the distinction of the target object and the similar object in the present embodiment is illustrated. In FIG. 14B, since the processes from step S1406 to step S1408 are the same as those from step S406 to step S408 in the first embodiment, the description will be omitted.

(Step S1401)

In step S1401, the model point sampling unit 13, the similar orientation designating unit 14, the specific part designating unit 15, and the position and orientation calculating unit 17 obtain the three-dimensional shape model of the target object 3 and the three dimensional shape model of the similar object 1300 from the three-dimensional shape model holding unit 12. The order of executing these processes may be optionally selected or may be obtained at the same time.

(Step S1402)

In step S1402, the model point sampling unit 13 samples the model points based on the information about the three-dimensional shape model of the target object 3 and the information about the three-dimensional shape model of the similar object 1300, which have been input. The points sampled here are used for performing the model fitting in steps S1408 and S1410 to be described below. Here, the condition for performing the sampling is similar to that in step S402 of the first embodiment, so the description thereof will be omitted.

(Step S1403)

In step S1403, the similar orientation designating unit 14 registers the conversion parameters of the relative position and orientation that is prone to be erroneously recognized, with respect to the target object 3 and the similar object 1300. Regarding the target object 3 and the similar object 1300 as shown in FIG. 13A, the conversion parameters corresponding to the relative position and orientation as shown in FIG. 13B are registered. Since the method of registering the conversion parameters of the relative position and orientation is similar to the method in step S403 of the first embodiment, the description thereof will be omitted.

(Step S1404)

In step S1404, the specific part designating unit 15 registers the specific part 503 that distinguishes the target object 3 and the similar object 1300 with the relative position and orientation registered in step S1403. If the relative position and orientation as shown in FIG. 13C is registered in step S1403, registering the specific part 503 as shown in FIG. 13D is in effect. Since the method of registering the specific part 503 in the present embodiment is similar to that in step S1403 and step S404 in the first embodiment, the description thereof will be omitted.

(Step S1405)

In step S1405, the specific part sampling unit 16 samples the model points in the specific part 503 for each of the three-dimensional shape model of the target object 3 and the three-dimensional shape model of the similar object 1300 based on the information about the specific part 503 registered in step S1404. Here, the sampled points are used for the calculation of the evaluation value in step S1411 to be described below. Here, the condition for performing the sampling is similar to that in step S405 of the first embodiment, so the description thereof will be omitted.

(Step S1409)

In step S1409, the position and orientation calculating unit 17 calculates an evaluation value for the position and the orientation of the target object 3 calculated in step S1408, and compares the evaluation value with a predetermined threshold value. As an example of the evaluation value, in a manner similar to the first embodiment, the average value of the residuals of all of the geometric features can be used with respect to the residual of the three-dimensional distance between the geometrical feature on the model surface in the position and the orientation after fitting and the geometric feature in the image. If the calculated average value E of the residuals is smaller than the predetermined threshold value, it is determined that the object is the target object 3, and the subsequent processes can be omitted. In contrast, if the average value E of the residuals is larger than the predetermined threshold value, it is determined that the object may be the similar object 1300, and the process proceeds to step S1410. In addition, any method may be used if the method of clearly distinguish between the target object 3 and the similar object 1300 is used for the position and the orientation calculated in step S1408. Note that this process may be omitted and the process may proceed to step S1410.

(Step S1410)

In step S1410, the position and orientation calculating unit 17 generates a new candidate for the position and the orientation by using the position and orientation To calculated in step S1408 and the conversion parameters of the orientation of the target object 3 and the orientation of the similar object 1300. First, the relative position and orientation recoverable from the conversion parameters is denoted by "T", and the new candidate for the position and the orientation made by using each of them is denoted by "T'".
"T'" is calculated as follows.

$$T' = T_0 T^{-1}$$

Next, the position and orientation calculating unit 17 calculates the position and the orientation so as to fit the shot image with the three-dimensional shape model by serving the position and orientation T' of the generated new candidate as an initial value. Here, the three-dimensional shape model uses both the model of the target object 3 and the model of the similar object 1300, and calculates the orientation for each of them. The position and the orientation calculated by using the three-dimensional shape model of the target object 3 is denoted by "$T_A$", and the position and the orientation calculated by using the three-dimensional shape model of the similar object 1300 is denoted by "$T_B$".

(Step S1411)

In step S1411, the position and orientation calculating unit 17 calculates the evaluation values from the degree of coincidence between the model points and the measurement points in the part registered as the specific part, with respect to the positions and orientations $T_A$, $T_B$ calculated in step S1410. As the evaluation value used here, the residual may be used as in a manner similar to step S1409, and the normalized cross-correlation between an image in which the target object 3 is projected based on the calculated position and orientation and a shot image may also be used. In addition, any method may be used if the method of clearly distinguishing whether or not the positions and orientations are correct is used based on the evaluation value.

(Step S1412)

In step S1412, the position and orientation calculating unit 17 compares the evaluation value (evaluation value A) calculated for the position and orientation $T_A$ with the evaluation value (evaluation value B) calculated for the position and orientation $T_B$. Specifically, if the evaluation value A is higher than the evaluation value B, it is determined that the object in the shot image is the target object 3. In contrast, if the evaluation value B is higher than the evaluation value A, it is determined that the object in the shot image is the similar object 1300.
Although the processing sequence in the present embodiment has been described above, it is not always necessary to strictly follow the processing flowcharts in FIGs. 14A and 14B in the present embodiment.

For example, if the sampling of the model points in the specific part is performed in step S1405, it is determined whether or not the model points are excessively sampled as in the second embodiment, and if the model points is excessively sampled, a thinning-out process may be added. Additionally, as in the third embodiment, the method of setting the sampling conditions for each candidate for the approximate position and orientation where the sampling in the specific part is performed may be used.

(Fifth Embodiment)

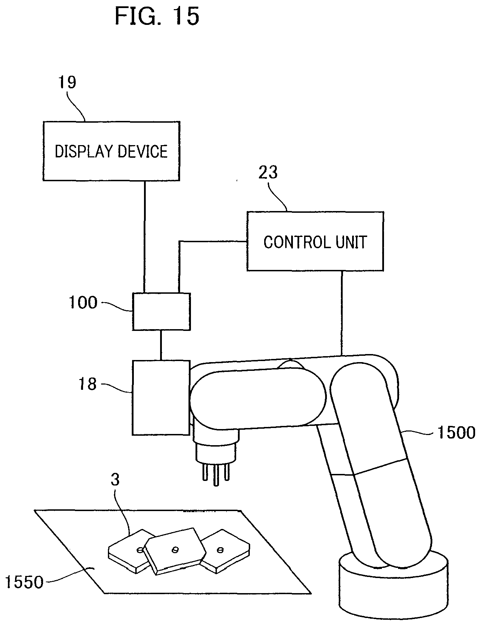

The above-described imaging device 18 can be used in a state of being supported by a support member. In the present embodiment, as an example, a description will be given of a control system installed and used in a robot arm 1500 as a gripping device as shown in FIG. 15. The measuring device having the imaging device 18 serving as the measuring unit projects a pattern light onto the target object 3 that has been bulk-loaded on a support 1550 and captures an image, and the information processing device 100 acquires the image. Then, the position and orientation calculating unit 17 of the information processing device 100 obtains the position and the orientation of the target object 3, and the control unit 23 acquires the information about the obtained position and the orientation. The control unit 23 transmits a drive command to the robot arm 1500 and controls the robot arm 1500, based on the information about the position and the orientation of the target object 3, which is the measurement result. The robot arm 1500 holds the target object 3 by a robot hand and the like at the tip to serve as a holding portion and a gripping portion, and moves the object by a translational move and rotational move. Further, it is possible to manufacture an article configured by a plurality of parts, for example, an electronic circuit board, a machine, and the like, by assembling the target object 3 to another part by the robot arm 1500. Additionally, an article can be manufactured by processing the target object 3 that has been moved. Additionally, the measurement data, the image, and the calculated results acquired by the information processing device 100 may be displayed on the display device 19 such as a display.

(Embodiment of Article Manufacturing Method)

The measurement apparatus according to the embodiments described above can be used for a method of manufacturing an article. The method of manufacturing an article may include a step of measuring an object by using the measurement apparatus and a step of performing a process on the object on which the measurement has been performed in the step based on the measurement result. The process may include at least one of, for example, processing, cutting, transportation, assembly(installation), inspection, and sorting. The article manufacturing method of the present embodiment is advantageous in at least one of the performance, quality, productivity, and production cost of the article, as compared with conventional methods.

(Other Embodiment)

Embodiment (s) of the present invention can also be realized by a computer of a system or apparatus that reads out and executes computer executable instructions (e.g., one or more programs) recorded on a storage medium (which may also be referred to more fully as a "non-transitory computer-readable storage medium") to perform the functions of one or more of the above-described embodiment (s) and/or that includes one or more circuits (e.g., application specific integrated circuit (ASIC)) for performing the functions of one or more of the above-described embodiment (s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment (s) . The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments.

**Claims**

1. An information processing device (100) that calculates a position and an orientation of a target object, the information processing device comprising:

   an acquiring unit (12) configured to acquire measurement data of a shape of the target object and a shape model of the target object; and a calculator (17) configured to calculate a position and an orientation of the target object based on sampling information of a specific part for specifying the orientation of the target object in the shape model acquired by the acquiring unit (12) and the measurement data of the shape of the target object.

**2.** The information processing device according to claim 1, further comprising a sampling unit (16) configured to determinate the sampling information.

**3.** The information processing device according to claims 1 or 2, wherein the sampling information includes information about a density of model points to be sampled, and the density of the model points in the specific part is higher than that of the model points in a part other than the specific part.

**4.** The information processing device according to any one of claims 1 to 3, wherein the number of model points to be sampled is equal to or less than a predetermined reference value.

**5.** The information processing device according to any one of claims 1 to 4, wherein the sampling information changes in accordance with a resolution or an image capturable range of an imaging device that images the target object.

**6.** The information processing device according to any one of claims 1 to 5, further comprising an approximate calculator (11) configured to calculate an approximate position and orientation of the target object,
wherein the sampling information is set for each candidate of the approximate position and orientation of the target object, and
the calculator (17) is configured to determine the sampling information to be used for calculating the position and orientation of the target object, based on the approximate position and orientation of the target object calculated by the approximate calculator (11).

**7.** The information processing device according to any one of claims 1 to 6, wherein the acquiring unit (12) is configured to further acquire a three-dimensional shape model of a similar obj ect that is similar in shape to the target obj ect,
the sampling information includes sampling information of a specific part to be used for distinction between the target object and the similar object, and
the calculator (17) is configured to determine whether or not a measured object is the target object, based on the sampling information of the target object and the sampling information of the similar object.

**8.** The information processing device according to any one of claims 1 to 7, further comprising an outputting unit (21) configured to output information of the position and the orientation of the target object calculated by the calculator (17).

**9.** The information processing device according to any one of claims 1 to 8, wherein the specific part is a part for distinguishing a similar orientation of the target object.

**10.** A measurement apparatus that measures a position and an orientation of a target object, the measurement apparatus comprising:

a measuring unit configured to measure a shape of the target object; and
the information processing device (100) according to any one of claims 1 to 9,
wherein the information processing device (100) is configured to acquire measurement data of the shape of the target object measured by the measuring unit and calculate the position and the orientation of the target object.

**11.** A system comprising:

the information processing device (100) according to any one of claims 1 to 9; and
a robot (1500) configured to hold and move the target object,
wherein the robot (1500) is configured to hold the target object based on the position and the orientation of the target object output from the information processing device (100).

**12.** A method of calculating a position and an orientation of a target object, the method comprising:

an acquisition step of acquiring measurement data of a shape of the target object and a shape model of the target object;
a designation step of distinguishing a similar orientation of the target object and designating a specific part for designating the orientation, in the shape model acquired in the acquisition step; and
a calculation step of calculating the position and the orientation of the target object based on the sampling information of the specific part designated in the designation step and the measurement data of the shape of the target object.

**13.** A storage medium storing a computer program causing a computer to perform the calculating method according to claim 12.

**14.** A method of manufacturing an article, comprising:

measuring a target object by using the measuring apparatus according to claim 10; and
processing the target object based on a result of the measurement.

FIG. 1

FIG. 2

INFORMATION PROCESSING DEVICE — 100

IMAGING DEVICE — 18

MEASUREMENT DATA HOLDING UNIT — 10

APPROXIMATE POSITION AND ORIENTATION CALCULATING UNIT — 11

THREE-DIMENSIONAL SHAPE MODEL HOLDING UNIT — 12

MODEL POINT SAMPLING UNIT — 13

STORAGE UNIT — 22

SIMILAR ORIENTATION DESIGNATING UNIT — 14

SPECIFIC PART DESIGNATING UNIT — 15

SPECIFIC PART SAMPLING UNIT — 16

POSITION AND ORIENTATION CALCULATING UNIT — 17

OUTPUT UNIT — 21

DISPLAY DEVICE — 19

OPERATION DEVICE — 20

CONTROL UNIT — 23

EP 3 330 921 A1

FIG. 3

## FIG. 4A

```
          ┌──────────────┐
          │    START     │
          └──────┬───────┘
                 │                    ╭ S401
      ┌──────────▼───────────────────┐
      │ INPUT THREE-DIMENSIONAL SHAPE MODEL │
      │          OF OBJECT           │
      └──────────┬───────────────────┘
                 │                    ╭ S402
      ┌──────────▼───────────────────┐
      │     SAMPLE  MODEL POINTS      │
      └──────────┬───────────────────┘
                 │                    ╭ S403
      ┌──────────▼───────────────────┐
      │   REGISTER SIMILAR ORIENTATION   │
      └──────────┬───────────────────┘
                 │                    ╭ S404
      ┌──────────▼───────────────────┐
      │     REGISTER SPECIFIC PART    │
      └──────────┬───────────────────┘
                 │                    ╭ S405
      ┌──────────▼───────────────────┐
      │    SAMPLING IN SPECIFIC PART  │
      └──────────┬───────────────────┘
                 │
              ┌──▼──┐
              │  A  │
              └─────┘
```

## FIG. 4B

```
                    ( A )
                      |
                      v
         ACQUIRE MEASUREMENT DATA              — S406
                      |
                      v
      CALCULATE APPROXIMATE POSITION AND       — S407
                ORIENTATION
                      |
                      v
      MODEL FITTING BY USING APPROXIMATE       — S408
       POSITION AND ORIENTATION AS INITIAL
            POSITION AND ORIENTATION
                      |
                      v
              IS FITTING RESIDUAL              — S409
   EQUAL TO OR LESS THAN PREDETERMINED   ——— YES ———
                 VALUE?                                |
                      |                                |
                     NO                                |
                      |                                |
                      v                                |
  CALCULATE NEW POSITION AND ORIENTATION       — S410  |
     BY USING CONVERSION PARAMETERS OF                 |
            SIMILAR ORIENTATION                        |
                      |                                |
                      v                                |
   NO ———    IS PROCESS COMPLETED              — S411  |
          FOR N NUMBER OF ORIENTATIONS?                |
                      |                                |
                     YES                               |
                      v                                |
    CALCULATE AND COMPARE EVALUATION           — S412  |
    VALUE IN SPECIFIC PART AND OUTPUT                   |
   POSITION AND ORIENTATION WITH THE                    |
        HIGHEST EVALUATION VALUE                        |
                      |                                 |
                      v  <——————————————————————————————
                   ( END )
```

FIG. 5B

501
502
z'

FIG. 5A

501
502

FIG. 5D

503

FIG. 5C

503

FIG. 6A

FIG. 6B

FIG. 6C

FIG. 7

FIG. 8

FIG. 9A

900

3

FIG. 9B

901

FIG. 9C

902

FIG. 9D

903

FIG. 9E

904

# FIG. 10A

```
            ┌─────────────┐
            │    START    │
            └─────────────┘
                   │
                   ▼
   ┌──────────────────────────────────┐  ⟋S1001
   │ INPUT THREE-DIMENSIONAL SHAPE MODEL │
   │            OF OBJECT               │
   └──────────────────────────────────┘
                   │
                   ▼
   ┌──────────────────────────────────┐  ⟋S1002
   │        SAMPLE MODEL POINTS        │
   └──────────────────────────────────┘
                   │
                   ▼
   ┌──────────────────────────────────┐  ⟋S1003
   │     REGISTER SIMILAR ORIENTATION  │
   └──────────────────────────────────┘
                   │
                   ▼
   ┌──────────────────────────────────┐  ⟋S1004
   │       REGISTER SPECIFIC PART      │
   └──────────────────────────────────┘
                   │
                   ▼
   ┌──────────────────────────────────┐  ⟋S1005
   │      SAMPLING IN SPECIFIC PART    │
   └──────────────────────────────────┘
                   │
                   ▼
              ╱─────────────╲                S1006
         ╱   IS THE NUMBER    ╲         NO
        ╱ OF MODEL POINTS IN SPECIFIC PART ╲───────┐
         ╲    EXCESSIVE?     ╱                      │
              ╲─────────────╱                       │
                   │ YES            ⟋S1007          │
                   ▼                                │
   ┌──────────────────────────────────┐            │
   │ THIN OUT MODEL POINTS IN SPECIFIC PART │       │
   └──────────────────────────────────┘            │
                   │◄───────────────────────────────┘
                   ▼
                 ┌───┐
                 │ B │
                 └───┘
```

# FIG. 10B

B

ACQUIRE MEASUREMENT DATA — S1008

CALCULATE APPROXIMATE POSITION AND ORIENTATION — S1009

MODEL FITTING BY USING APPROXIMATE POSITION AND ORIENTATION AS INITIAL POSITION AND ORIENTATION — S1010

IS FITTING RESIDUAL EQUAL TO OR LESS THAN PREDETERMINED VALUE? — S1011   YES

NO

CALCULATE NEW POSITION AND ORIENTATION BY USING CONVERSION PARAMETERS OF SIMILAR ORIENTATION — S1012

IS PROCESS COMPLETED FOR N NUMBER OF ORIENTATIONS? — S1013   NO

YES

CALCULATE AND COMPARE EVALUATION VALUE IN SPECIFIC PART AND OUTPUT POSITION AND ORIENTATION WITH THE HIGHEST EVALUATION VALUE — S1014

END

## FIG. 11A

```
                        START
                          │  ┌─ S1101
        ┌─────────────────▼─────────────────┐
        │  INPUT THREE-DIMENSIONAL SHAPE MODEL │
        │              OF OBJECT               │
        └─────────────────┬─────────────────┘
                          │  ┌─ S1102
        ┌─────────────────▼─────────────────┐
        │         SAMPLE MODEL POINTS         │
        └─────────────────┬─────────────────┘
                          │  ┌─ S1103
        ┌─────────────────▼─────────────────┐
        │       REGISTER SIMILAR ORIENTATION  │
        └─────────────────┬─────────────────┘
                          │  ┌─ S1104
        ┌─────────────────▼─────────────────┐
        │         REGISTER SPECIFIC PART      │
        └─────────────────┬─────────────────┘
                          │  ┌─ S1105
        ┌─────────────────▼─────────────────┐
        │     SET SAMPLING CONDITIONS FOR EACH │
        │ CANDIDATE OF APPROXIMATE POSITION AND│
        │  ORIENTATION FOR SAMPLING IN SPECIFIC│
        │                 PART                 │
        └─────────────────┬─────────────────┘
                          │  ┌─ S1106
        ┌─────────────────▼─────────────────┐
        │   SAMPLING IN SPECIFIC PART FOR EACH │
        │ CANDIDATE OF APPROXIMATE POSITION AND│
        │              ORIENTATION             │
        └─────────────────┬─────────────────┘
                          │
                          ▼
                         (C)
```

# FIG. 11B

```
        ┌───┐
        │ C │
        └───┘
          │
          ▼                                        S1107
┌─────────────────────────────────────┐
│      ACQUIRE MEASUREMENT DATA        │
└─────────────────────────────────────┘
          │                                        S1108
          ▼
┌─────────────────────────────────────┐
│  CALCULATE APPROXIMATE POSITION AND  │
│             ORIENTATION              │
└─────────────────────────────────────┘
          │                                        S1109
          ▼
┌─────────────────────────────────────┐
│     DETERMINE MODEL POINTS TO BE USED │
└─────────────────────────────────────┘
          │                                        S1110
          ▼
┌─────────────────────────────────────┐
│  MODEL FITTING BY USING APPROXIMATE  │
│  POSITION AND ORIENTATION AS INITIAL │
│      POSITION AND ORIENTATION        │
└─────────────────────────────────────┘
          │
          ▼                                        S1111
       IS FITTING RESIDUAL                           YES
  EQUAL TO OR LESS THAN PREDETERMINED  ◇──────►
              VALUE?
          │ NO                                    S1112
          ▼
┌─────────────────────────────────────┐
│ CALCULATE NEW POSITION AND ORIENTATION│
│   BY USING CONVERSION PARAMETER OF    │
│          SIMILAR ORIENTATION          │
└─────────────────────────────────────┘
          │                                        S1113
   NO     ▼
  ◄────── IS PROCESS
     COMPLETED FOR N NUMBER OF  ◇
          ORIENTATIONS?
          │ YES                                   S1114
          ▼
┌─────────────────────────────────────┐
│   CALCULATE AND COMPARE EVALUATION    │
│  VALUE IN SPECIFIC PART AND OUTPUT    │
│ POSITION AND ORIENTATION WITH THE     │
│      HIGHEST EVALUATION VALUE         │
└─────────────────────────────────────┘
          │
          ▼
      ┌─────────┐
      │   END   │
      └─────────┘
```

FIG. 12A

18

800

1200

1210

FIG. 12B

4

900

FIG. 12C

4

y

z ⊙ → x

FIG. 13A

4

3

FIG. 13B

1301

1300

FIG. 13C

1301

4

FIG. 13D

503

1301

## FIG. 14A

```
                    ┌──────────────┐
                    │    START     │
                    └──────┬───────┘
                           │                    ╭─ S1401
         ┌─────────────────▼─────────────────┐
         │ INPUT THREE-DIMENSIONAL SHAPE MODELS│
         │  OF TARGET OBJECT AND SIMILAR OBJECT│
         └─────────────────┬─────────────────┘
                           │                    ╭─ S1402
         ┌─────────────────▼─────────────────┐
         │        SAMPLE MODEL POINTS        │
         └─────────────────┬─────────────────┘
                           │                    ╭─ S1403
         ┌─────────────────▼─────────────────┐
         │REGISTER RELATIVE ORIENTATION TO SIMILAR│
         │               OBJECT              │
         └─────────────────┬─────────────────┘
                           │                    ╭─ S1404
         ┌─────────────────▼─────────────────┐
         │       REGISTER SPECIFIC PART      │
         └─────────────────┬─────────────────┘
                           │                    ╭─ S1405
         ┌─────────────────▼─────────────────┐
         │ SAMPLE MODEL POINTS OF TARGET OBJECT│
         │  AND SIMILAR OBJECT IN SPECIFIC PART│
         └─────────────────┬─────────────────┘
                           │
                         ╱ D ╲
```

## FIG. 14B

```
                    ┌─────┐
                    │  D  │
                    └──┬──┘
                       │                              ╭─S1406
       ┌───────────────▼──────────────────┐
       │      ACQUIRE MEASUREMENT DATA      │
       └───────────────┬──────────────────┘
                       │                              ╭─S1407
       ┌───────────────▼──────────────────┐
       │  CALCULATE APPROXIMATE POSITION AND│
       │    ORIENTATION OF TARGET OBJECT    │
       └───────────────┬──────────────────┘
                       │                              ╭─S1408
       ┌───────────────▼──────────────────┐
       │  MODEL FITTING FOR TARGET OBJECT BY USING │
       │ APPROXIMATE POSITION AND ORIENTATION AS   │
       │    INITIAL POSITION AND ORIENTATION       │
       └───────────────┬──────────────────┘
                       │              ╭─S1409
              ◇────────▼────────◇
            IS FITTING RESIDUAL              YES
      EQUAL TO OR LESS THAN PREDETERMINED ──────┐
              VALUE?                            │
              ◇────────┬────────◇              │
                       │ NO          ╭─S1410     │
       ┌───────────────▼──────────────────┐     │
       │ CALCULATE NEW POSITION AND ORIENTATION BY│   │
       │USING CONVERSION PARAMETERS OF ORIENTATION│   │
       │BETWEEN TARGET OBJECT AND  SIMILAR OBJECT │   │
       └───────────────┬──────────────────┘     │
                       │             ╭─S1411      │
       ┌───────────────▼──────────────────┐     │
       │ CALCULATE EVALUATION VALUE IN SPECIFIC PART│  │
       │    WITH MODEL POINTS OF TARGET OBJECT     │  │
       │ (EVALUATION VALUE A) AND EVALUATION VALUE IN│ │
       │  SPECIFIC PART WITH MODEL POINTS OF SIMILAR │ │
       │      OBJECT (EVALUATION VALUE B)           │ │
       └───────────────┬──────────────────┘     │
                       │          ╭─S1412         │
              ◇────────▼────────◇               │
          IS EVALUATION VALUE A HIGHER THAN  YES │
              EVALUATION VALUE B?  ──────────────┤
              ◇────────┬────────◇               │
                       │ NO                      │
             ╭─────────▼─────────╮    ╭──────────▼─────────╮
             │   DETERMINE TO BE  │    │  DETERMINE TO BE   │
             │   SIMILAR OBJECT   │    │   TARGET OBJECT    │
             ╰───────────────────╯    ╰────────────────────╯
```

# FIG. 15

Europäisches
Patentamt

European
Patent Office

Office européen
des brevets

# EUROPEAN SEARCH REPORT

Application Number

EP 17 00 1905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2011/211066 A1 (FUJIKI MASAKAZU [JP]) 1 September 2011 (2011-09-01) * paragraph [0030] - paragraph [0082], figures 2-4 * ----- | 1-14 | INV. G06T7/00 ADD. G01B11/00 |
| A | US 2013/114861 A1 (TAKIZAWA SHOTA [JP]) 9 May 2013 (2013-05-09) * paragraph [0057]; figure 1 * ----- | 1-14 | G01B11/24 |
| A | JP 2009 129189 A (IHI CORP) 11 June 2009 (2009-06-11) * paragraph [0012]; figure 1 * ----- | 1-14 | |

TECHNICAL FIELDS
SEARCHED       (IPC)

G06T
G01B

The present search report has been drawn up for all claims

| Place of search | Date of completion of the search | Examiner |
|---|---|---|
| Munich | 6 February 2018 | Malcoci, Andrei |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 
& : member of the same patent family, corresponding
       document

EPO FORM 1503 03.82 (P04C01)

## ANNEX TO THE EUROPEAN SEARCH REPORT
## ON EUROPEAN PATENT APPLICATION NO.

EP 17 00 1905

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2018

| Patent document cited in search report | | Publication date | Patent family member(s) | | Publication date |
|---|---|---|---|---|---|
| US 2011211066 | A1 | 01-09-2011 | JP<br>JP<br>US | 5548482 B2<br>2011179910 A<br>2011211066 A1 | 16-07-2014<br>15-09-2011<br>01-09-2011 |
| US 2013114861 | A1 | 09-05-2013 | CN<br>DE<br>JP<br>US | 103085076 A<br>102012021375 A1<br>2013101045 A<br>2013114861 A1 | 08-05-2013<br>08-05-2013<br>23-05-2013<br>09-05-2013 |
| JP 2009129189 | A | 11-06-2009 | JP<br>JP | 4900204 B2<br>2009129189 A | 21-03-2012<br>11-06-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011175477 A
- JP 2015194478 A
- JP 2011179910 A